# EUROPÄISCHE PATENTANMELDUNG

(11) **EP 3 372 744 A1**
(43) Veröffentlichungstag der Anmeldung: **12.09.2018**
(21) Anmeldenummer: 18157984.8
(22) Anmeldetag: 22.02.2018
(51) Int. Cl.: E04C 5/12, F03D 13/20, E04H 12/16

(54) **SEILFÜHRUNG ZUM BESCHÄDIGUNGSFREIEN FÜHREN EINES SEILS SOWIE ENTSPRECHENDES VERFAHREN**

(30) Priorität: 07.03.2017 DE 102017203645; 20.03.2017 DE 102017204566
(71) Anmelder: KB Vorspann-Technik GmbH, 82152 Krailling (DE)
(72) Erfinder: Huber, Andreas, 9991 Dölsach (AT); Fischer, Christoph, 86420 Diedorf (DE); Damoser, Manfred, 5071 Wals b. Salzburg (AT); Hameter, Manfred, 5020 Salzburg (AT); Huber, Harald, 9900 Oberlienz (AT); Heubel, Thomas, 81827 München (DE)
(74) Vertreter: Körfer, Thomas

(57) **Zusammenfassung**

Eine Seilführung (70) zum beschädigungsfreien Führen eines Seils durch eine für das Einziehen des Seils vorgesehene Öffnung (77). Die Seilführung (70) weist eine erste Rolle (71) und eine zweite Rolle (72) auf, die an einem ersten Ende eines teleskopierbaren Elements (73) angeordnet sind und ein Rollenfenster bilden. Zudem ist an einem zweiten Ende des teleskopierbaren Elements (73) ein Einhängeelement (74) derart angeordnet, dass die Seilführung (70) an der für das Einziehen des Seils vorgesehenen Öffnung (77) befestigbar ist.

## Beschreibung

Die Erfindung betrifft eine Seilführung sowie ein entsprechendes Verfahren zum beschädigungsfreien Führen eines Seils, mit dem jeweils insbesondere Spannglieder, die zum Vorspannen eines Turmbauwerks aus übereinander angeordneten Bauelementen dienen, durch entsprechend für das Einziehen von Spanngliedern vorgesehene Öffnungen im Bereich der Turmkrone des Turmbauwerks nach oben gezogen werden.

Im Allgemeinen wächst der Bedarf an Turmbauwerken aus übereinander angeordneten Bauelementen, die mithilfe mehrere Spannglieder vorgespannt werden und insbesondere für die Errichtung von Windkraftanlagen eingesetzt werden, mit der steigenden Nachfrage nach erneuerbaren Energien.

Das Dokument EP 1 262 614 A2 zeigt ein Turmbauwerk aus Spannbeton, bei dem sich zwischen dem Fundament und der Turmkrone mehrere Spannglieder erstrecken, durch die die Turmwandung mit einer Vorspannung beaufschlagbar ist. Auch wenn diese Spannglieder außerhalb der Turmwandung durch den Hohlraum des Turmbauwerks aus Spannbeton geführt sind, müssen die Spannglieder nachteilig jeweils über eine scharfe Kante der für das Einziehen eines Spannglieds entsprechend vorgesehenen Öffnung im Bereich der Turmkrone gezogen werden, wodurch es zu einer Beschädigung des Spannglieds kommen kann.

Demnach ist es die Aufgabe der vorliegenden Erfindung, eine Seilführung sowie ein entsprechendes Verfahren zum beschädigungsfreien Einziehen von Spanngliedern, die insbesondere zum Vorspannen eines Turmbauwerks geeignet sind, zur Verfügung zu stellen.

Die vorgenannte Aufgabe wird durch die Seilführung gemäß Anspruch 1 sowie durch das entsprechende Verfahren gemäß Anspruch 5 gelöst. Dabei enthalten die jeweils abhängigen Ansprüche vorteilhafte Weiterbildungen der Erfindung.

Ein erster Aspekt der Erfindung ist eine Seilführung zum beschädigungsfreien Führen eines Seils durch eine für das Einziehen des Seils vorgesehene Öffnung, wobei die Seilführung eine erste Rolle aufweist, die an einem ersten Ende eines teleskopierbaren Elements angeordnet ist.

Es ist vorteilhaft, wenn an einem zweiten Ende des teleskopierbaren Elements ein Einhängeelement derart angeordnet ist, dass die Seilführung an der für das Einziehen des Seils vorgesehenen Öffnung befestigbar ist.

Vorzugsweise weist die Seilführung eine zweite Rolle auf, die derart angeordnet ist, dass die zweite Rolle mit der ersten Rolle ein Rollenfenster bildet, durch das das Seil geführt werden kann.

Weiter vorzugsweise ist die zweite Rolle lösbar, insbesondere mithilfe einer Schraubverbindung, an der Seilführung angeordnet, so dass das Seil nach zuvorigem Lösen der zweiten Rolle in das Fenster eingelegt werden kann. Dabei weist die Schraubverbindung vorzugsweise Flügelmuttern auf, da diese vorteilhafterweise auch ohne die Zuhilfenahme von Werkzeugen gelöst bzw. fixiert werden können.

Ein zweiter Aspekt der Erfindung ist ein Verfahren zum beschädigungsfreien Führen eines Seils durch eine für das Einziehen des Seils vorgesehene Öffnung mithilfe einer oben beschriebenen Seilführung mit folgenden Verfahrensschritten: Teleskopieren des teleskopierbaren Elements der Seilführung und Befestigen der Seilführung im Bereich der für das Einziehen des Seils vorgesehenen Öffnung.

Es ist besonders vorteilhaft, wenn das mithilfe der Seilführung geführte Seil annähernd senkrecht nach oben gezogen wird und das erste Ende des teleskopierbaren Elements nach unten zeigt.

Ferner ist es vorteilhaft, wenn das Seil zunächst durch ein Rollenfenster zwischen der ersten Rolle und einer zweiten Rolle der Seilführung geführt wird oder nach zuvorigem Öffnen des Rollenfensters in dieses eingelegt wird und anschließend durch Zug am Zugende des Seils insbesondere nach oben gezogen wird.

Des Weiteren ergibt sich ein Vorteil, wenn ein Anstoßen eines am zugfernen Ende des Seils angeordneten Elements, welches aufgrund seiner Abmessungen nicht durch ein Rollenfenster der Seilführung passt, dazu führt, dass das teleskopierbare Element der Seilführung zunächst zusammengeschoben und die Seilführung anschließend aus der Öffnung herausgezogen wird.

Vorzugsweise wird, nachdem die Seilführung aus der Öffnung herausgezogen wurde, die Seilführung durch Öffnen des Rollenfensters vom Seil entfernt.

Ferner vorzugsweise wird das Verfahren zum beschädigungsfreien Führen eines Seils verwendet, mit dem jeweils Spannglieder, die zum Vorspannen eines Turmbauwerks aus übereinander angeordneten Bauelementen dienen, durch entsprechend für das Einziehen von Spanngliedern vorgesehene Öffnungen im Bereich der Turmkrone des Turmbauwerks nach oben gezogen werden.

Exemplarische Ausführungsbeispiele der Erfindung sind in den Zeichnungen nur beispielhaft dargestellt und werden im Folgenden näher beschrieben.

In der Zeichnung zeigen
- Fig. 1a: die schematische Ausführung eines beispielhaften ersten Schrittes eines Verfahrens zum Vorspannen eines Turmbauwerks;
- Fig. 1b: die schematische Ausführung eines beispielhaften zweiten Schrittes des Verfahrens zum Vorspannen eines Turmbauwerks;
- Fig. 1c: die schematische Ausführung eines beispielhaften dritten Schrittes des Verfahrens zum Vorspannen eines Turmbauwerks;
- Fig. 1d: die schematische Ausführung eines beispielhaften vierten Schrittes des Verfahrens zum Vorspannen eines Turmbauwerks;
- Fig. 1e: die schematische Ausführung eines beispielhaften fünften Schrittes des Verfahrens zum Vorspannen eines Turmbauwerks;
- Fig. 2a: die dreidimensionale Darstellung einer bespielhaften Arretiervorrichtung;
- Fig. 2b: die Seitenansicht einer ersten Längsseite der beispielhaften Arretiervorrichtung gemäß Fig. 2a;
- Fig. 2c: die Seitenansicht einer zweiten Längsseite der beispielhaften Arretiervorrichtung gemäß Fig. 2a;
- Fig. 2d: die Seitenansicht einer dritten Längsseite der beispielhaften Arretiervorrichtung gemäß Fig. 2a;
- Fig. 2e: die Seitenansicht einer Querseite der beispielhaften Arretiervorrichtung gemäß Fig. 2a;
- Fig. 3a: die dreidimensionale Darstellung eines beispielhaften Vorspann-Systems;
- Fig. 3b: eine Draufsicht auf die Darstellung des beispielhaften Vorspann-Systems gemäß Fig. 3a;
- Fig. 4a: die dreidimensionale Darstellung einer beispielhaften Ausführungsform der erfindungsgemäßen Seilführung im teleskopierten Zustand;
- Fig. 4b: die dreidimensionale Darstellung der beispielhaften Ausführungsform der erfindungsgemäßen Seilführung gemäß Fig. 4a im deteleskopierten Zustand;
- Fig. 5a: die Seitenansicht einer ersten Seite der beispielhaften Ausführungsform der erfindungsgemäßen Seilführung gemäß Fig. 4a im teleskopierten Zustand;
- Fig. 5b: die Seitenansicht der ersten Seite der beispielhaften Ausführungsform der erfindungsgemäßen Seilführung gemäß Fig. 5a im deteleskopierten Zustand;
- Fig. 6a: die Seitenansicht einer zweiten Seite der beispielhaften Ausführungsform der erfindungsgemäßen Seilführung gemäß Fig. 4a im teleskopierten Zustand;
- Fig. 6b: die Seitenansicht der zweiten Seite der beispielhaften Ausführungsform der erfindungsgemäßen Seilführung gemäß Fig. 6a im deteleskopierten Zustand;
- Fig. 6c: die Draufsicht auf die beispielhafte Ausführungsform der erfindungsgemäßen Seilführung gemäß Fig. 4a bzw. 4b;
- Fig. 7a: die dreidimensionale Darstellung der beispielhaften Ausführungsform der erfindungsgemäßen Seilführung gemäß Fig. 4a in Verbindung mit einem hochzuziehenden Spannglied;
- Fig. 7b: die dreidimensionale Darstellung der beispielhaften Ausführungsform der erfindungsgemäßen Seilführung gemäß Fig. 4b in Verbindung mit einem hochzuziehenden Spannglied;
- Fig. 8a: die Seitenansicht der dreidimensionalen Darstellung gemäß Fig. 7a; und
- Fig. 8b: die Seitenansicht der dreidimensionalen Darstellung gemäß Fig. 7b.

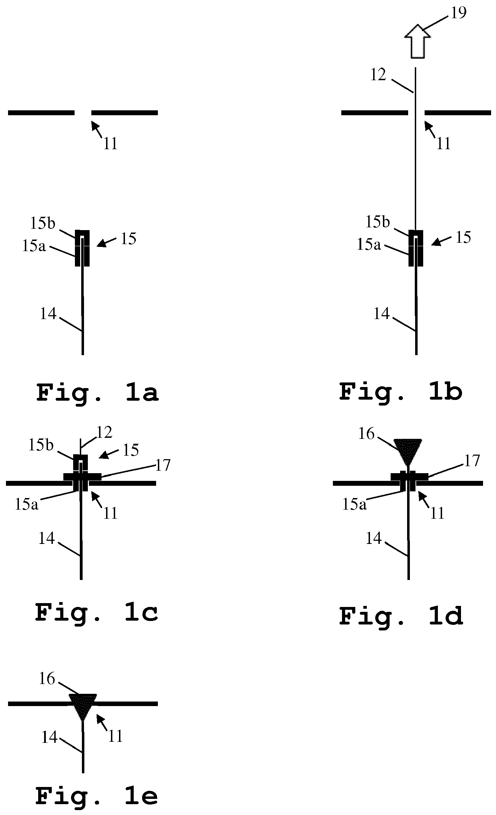

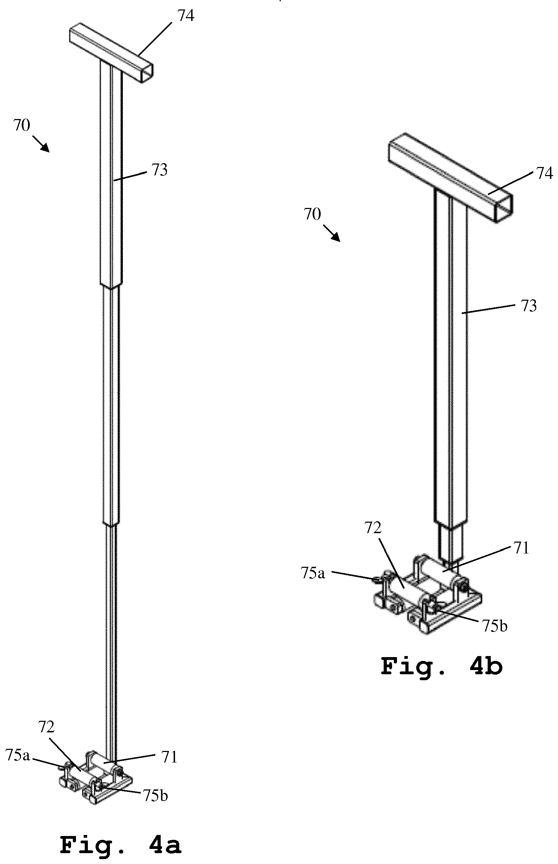

Bevor eine beispielhafte Ausführungsform der erfindungsgemäßen Seilführung gemäß den Figuren 4a bis 8b gezeigt wird, sei zunächst mithilfe der Figuren 1a bis 3b insbesondere der Anwendungsbereich, der das beschädigungsfreie Führen eines Seils betrifft, mit dem jeweils Spannglieder, die zum Vorspannen eines Turmbauwerks aus übereinander angeordneten Bauelementen dienen, durch entsprechend für das Einziehen von Spanngliedern vorgesehene Öffnungen im Bereich der Turmkrone des Turmbauwerks nach oben gezogen werden, veranschaulicht.

Fig. 1a zeigt die schematische Darstellung eines exemplarischen ersten Schrittes eines Verfahrens zum Vorspannen eines Turmbauwerks aus übereinander angeordneten Bauelementen, die mithilfe mehrerer Spannglieder vorgespannt werden. Hierbei wird an einem Spannglied 14, das später durch eine für das Einziehen des Spanngliedes 14 vorgesehene Öffnung 11 im Bereich der Turmkrone gezogen werden soll, zunächst eine Arretiervorrichtung 15 angebracht. Diese Arretiervorrichtung 15 weist einen ersten Teil 15a, insbesondere eine Bandklemme 15a, und einen zweiten Teil 15b, insbesondere eine Zugklemme 15b, auf, wobei die Bandklemme 15a und die Zugklemme 15b jeweils für sich am Spannglied 14 arretiert sind und zusätzlich trennbar miteinander verbunden sein können.

In einem nächsten Schritt gemäß Fig. 1b wird ein Zugelement 12, insbesondere ein Zugseil 12, am oberen Ende der Zugklemme 15b der Arretiervorrichtung 15 befestigt und das Spannglied 14 mit dessen Hilfe nach oben in Richtung Turmkrone gezogen (illustriert durch den Pfeil 19).

Weiterhin weist der erste Teil bzw. die Bandklemme 15a der Arretiervorrichtung 15 mindestens eine Öffnung auf, durch die seitlich mindestens ein Flachstahl 17 geschoben werden kann. Auf diese Weise wird, nachdem das Spannglied 14 entsprechend hochgezogen wurde, die Bandklemme 15a und damit auch die Arretiervorrichtung 15 im Bereich der Turmkrone temporär arretiert: Das seitliche Einbringen mindestens eines Flachstahls, der an den Seiten entsprechend übersteht, verhindert ein Hinunterfallen des Spannglieds 14 und arretiert dieses somit im Bereich der Turmkrone.

Anschließend werden gemäß Fig. 1d das Zugseil 12 und die Zugklemme 15b vom Spannglied 14 entfernt und am dadurch freigelegten Ende des Spannglieds 14 eine Fixiervorrichtung 16 angebracht, wobei dies problemlos möglich ist, da das Ende des Spannglieds 14 dank der Bandklemme 15a der Arretiervorrichtung 15, die mithilfe mindestens einen Flachstahls 17 das Spannglied 14 in Position hält, nicht unter Zug steht. Die Fixiervorrichtung 16 dient dazu, das Spannglied 14 endgültig im Bereich der Öffnung 11 zu fixieren, nachdem alle Teile der temporären Arretiervorrichtung 15 sowie der mindestens eine Flachstahl 17 im nächsten Schritt gemäß Fig. 1e entfernt wurden.

Die Fixiervorrichtung 16 ist dabei beispielsweise als Konus ausgeführt, durch den die Litzen des Spannglieds 14 gezogen und anschließend durch das Einfügen mindestens einen Keils in dem Konus fixiert werden. Vorteilhafterweise fixiert sich das Spannglied 14 bzw. fixieren sich dessen Litzen auf diese Weise selbst in der Fixiervorrichtung 16, da Zug am Spannglied 14 dazu führt, dass der mindestens eine Keil weiter in den Konus gezogen wird, wodurch das Spannglied 14 festgepresst wird.

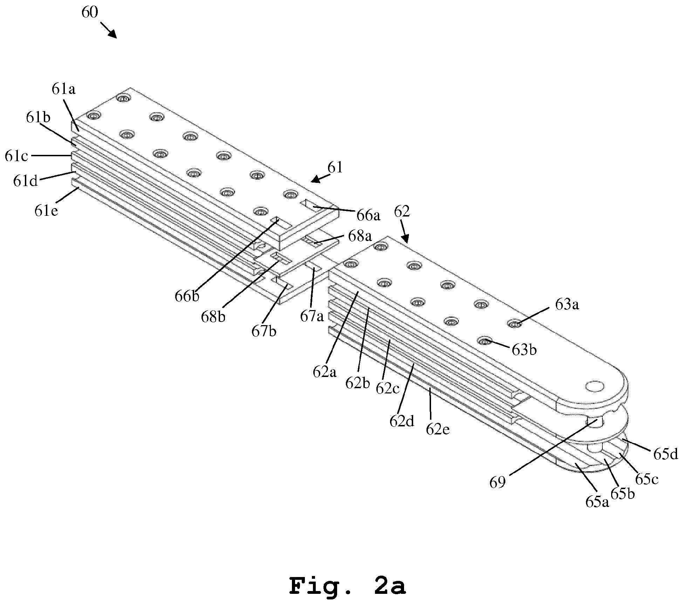

Fig. 2a zeigt ein Ausführungsbeispiel einer Arretiervorrichtung 60 zum temporären Arretieren eines Spannglieds im Bereich der Turmkrone.
Die Arretiervorrichtung 60 weist einen ersten Teil 61, insbesondere eine Bandklemme 61, und einen zweiten Teil 62, insbesondere eine Zugklemme 62, auf. Die beiden Teile 61 und 62 sind nicht miteinander verbindbar, was vorteilhafterweise zu einer leichteren Montage bzw. Demontage der Arretiervorrichtung 60 am bzw. vom Spannglied führt. Der vorteilhafte Verzicht einer expliziten Kopplung zwischen der Bandklemme 61 und der Zugklemme 62 nutzt die entsprechende Steifigkeit des Spannglieds aus.

Während der erste Teil 61 der Arretiervorrichtung 60 bzw. die Bandklemme 61 fünf Klemmbacken 61a-e aufweist, weist auch der zweite Teil 62 der Arretiervorrichtung 60 fünf Klemmbacken 62a-e auf. Zudem weisen alle innenliegenden Klemmbacken jeweils auf beiden Seiten vier Einkerbungen auf und alle außenliegenden Klemmbacken 61a, 61e, 62a, 62e jeweils auf ihrer inneren Seite vier Einkerbungen auf; diese Einkerbungen sind exemplarisch an der Klemmbacke 62e mit 65a-d bezeichnet. Somit lässt sich ein Spannglied, welches im Ausführungsbeispiel 4x4 Litzen aufweist, sicher in der Arretiervorrichtung fixieren, wobei gleichzeitig sichergestellt ist, dass die Litzen dank der entsprechenden Einkerbungen nicht beschädigt werden.

Um die Klemmbacken 61a-e und 62a-e entsprechend fest aufeinander zu pressen und das eingeführte Spannglied dadurch sicher fixieren zu können, sind Schrauben vorgesehen, von denen zwei beispielhaft mit 63a und 63b bezeichnet sind. Der Anpressdruck liegt in einem besonders vorteilhaften Bereich, wenn der erste Teil 61 bzw. die Bandklemme 61 der Arretiervorrichtung 60 zwölf Schrauben, und der zweite Teil 62 bzw. die Zugklemme 62 der Arretiervorrichtung 60 zehn Schrauben aufweist.

Des Weiteren weisen die Klemmbacken 61a, 61c, 61e übereinanderliegende Öffnungen 66a, 66b, 67a, 67b, 68a, 68b auf, so dass im hier gezeigten Fall zwei Flachstähle der Breite der Bandklemme 61 nach durch diese hindurchgeschoben werden können. Da die Flachstähle länger sind als die Bandklemme 61 breit ist, stehen diese über und arretieren so das Spannglied im Bereich der Turmkrone temporär, da ein Hinunterfallen des Spannglieds durch die für das Einziehen des Spannglieds vorgesehene Öffnung im Bereich der Turmkrone dank der überstehenden Flachstähle sicher verhindert wird.

Zudem weist die Zugklemme 62 der Arretiervorrichtung 60 in ihrem oberen Bereich einen Anhängebolzen 69 zur Befestigung eines Zugelements, insbesondere eines Zugseils, auf, um das Spannglied in den Bereich der Turmkrone hochziehen zu können.

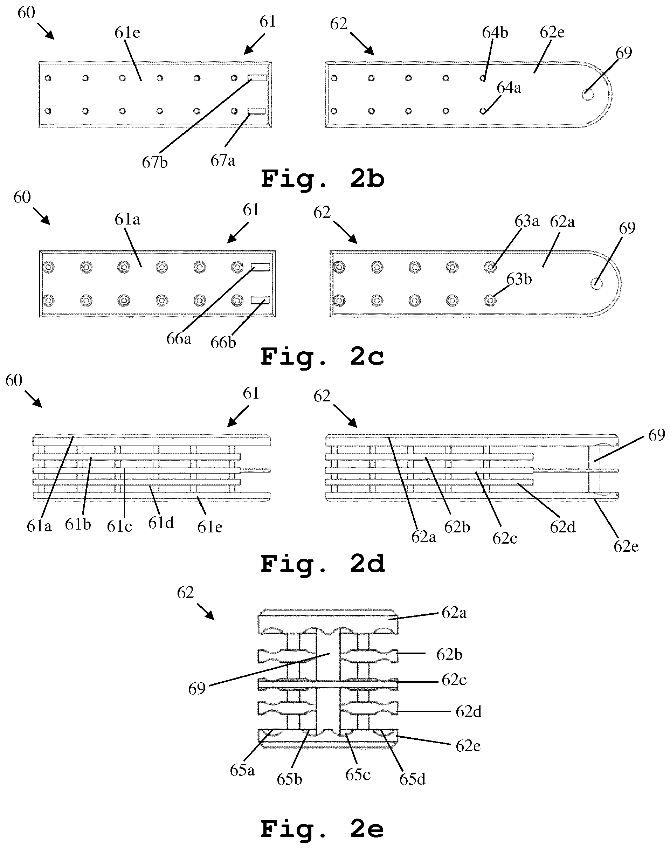

Während Fig. 2b ferner die Seitenansicht der Längsseite der Arretiervorrichtung 60 zeigt, die gemäß Fig. 2a nicht zu erkennen ist, zeigen die übrigen Darstellungen gemäß Figuren 2c, 2d und 2e Seitenansichten der Arretierungsvorrichtung 60, die auch der Fig. 2a entnommen werden können, weshalb die entsprechenden Bestandteile dieselben Bezugszeichen aufweisen. Zusätzlich erkennt man gemäß Fig. 2b die Stellen, an denen die Schrauben, die dem Zusammenpressen der Klemmbacken 61a-e und 62a-e dienen und von denen beispielhaft zwei mit 64a und 64b bezeichnet werden, an der Außenseite der Klemmbacken 61e und 62e zum Vorschein kommen.
Die Schrauben finden weiterhin entweder dadurch Halt, dass die für die Schrauben vorgesehenen Löcher in den Klemmbacken 61a-e und 62a-e jeweils ein Gewinde aufweisen, oder dadurch, dass jede Schraube jeweils mithilfe einer Schraubenmutter an deren Ende im Bereich der Außenseite der Klemmbacken 61 und 62e fixiert wird.

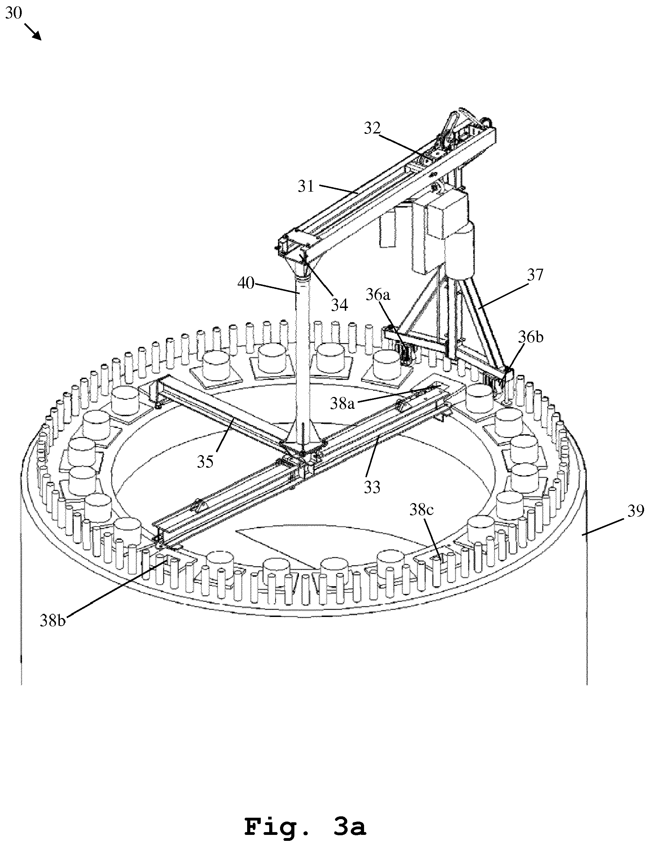

Des Weiteren illustriert Fig. 3a ein Ausführungsbespiel eines erfindungsgemäßen Vorspann-Systems 30.

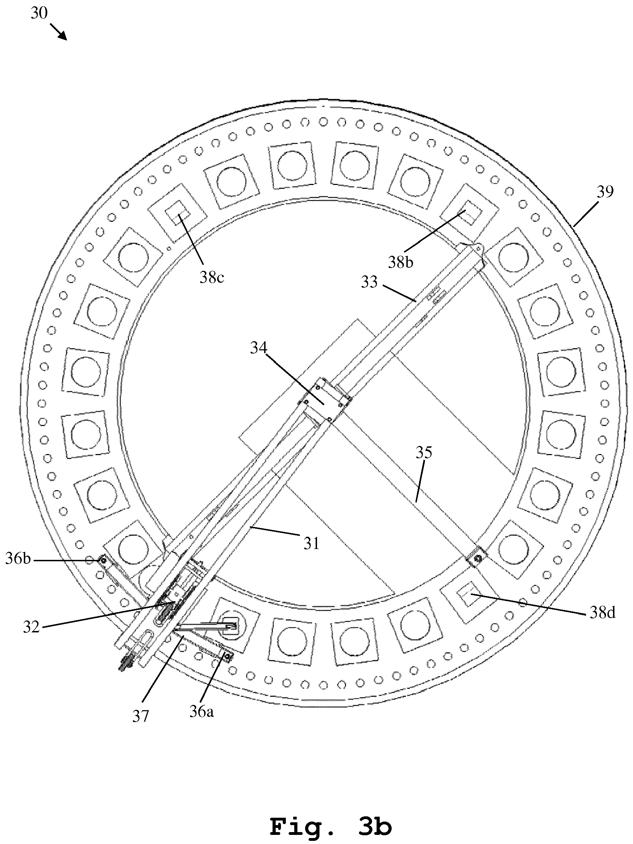

Gemäß Fig. 3a und 3b ist ein Traverse 33 im Bereich der Turmkrone 39 so angeordnet, dass deren Mitte im Zentrum der Turmkrone 39 liegt. Zudem ist die Traverse 33 zusätzlich mit einem Verbindungsstück 35 gegen Verrutschen bzw. Abrutschen gesichert, wobei das Verbindungsstück 35 insbesondere die Mitte der Traverse 33 mit dem Randbereich der Turmkrone 39 verbindet und vorzugsweise senkrecht zur Traverse 33 angeordnet ist.

Ferner erstreckt sich ausgehend von der Traverse 33 eine Achse 40 nach oben. Die Achse 40 verläuft vorzugsweise parallel zu einer Achse durch das Zentrum der Turmkrone 39 bzw. zur Rotationsachse der Turmkrone 39. Weiter vorzugsweise deckt sich die Achse 40 mit der Achse durch das Zentrum der Turmkrone 39 bzw. mit der Rotationsachse der Turmkrone 39.

Zudem ist die Achse 40 drehbar an der Traverse 33 angeordnet. Dementsprechend ist sie drehbar um einen Drehpunkt 34, der vorzugsweise im Zentrum oder zumindest in der Nähe des Zentrums der Turmkrone 39 liegt.

Weiterhin ist vorzugsweise senkrecht an der Achse 40 und damit vorzugsweise parallel zur Traverse 33 ein Arm 31 angeordnet, der eine verschiebbare Winde 32 aufweist. Die verschiebbare Winde 32 dient dazu, ein Spannglied mithilfe eines Zugelements, insbesondere mithilfe eines Zugseils, durch eine dafür vorgesehene Öffnung 38a, 38b, 38c, 38d hochzuziehen. Aufgrund der Tatsache, dass die Winde 32 verschiebbar am Arm 31 angeordnet ist, lässt sich die Winde 32 besonders einfach über der gewünschten Öffnung, beispielsweise über einer der Öffnungen 38a, 38b, 38c, 38d positionieren.

Damit der Arm 31 der Last des Spannglieds sicher Stand hält, ist an dessen Ende vorzugsweise senkrecht am Arm 31 und damit vorzugsweise parallel zur Achse 40 eine Stütze 37 angeordnet. Die Stütze 37 steht dabei vorteilhafterweise nicht fest auf der Wandung der Turmkrone 39, sondern mithilfe feststellbarer Räder 36a, 36b auf der Wandung der Turmkrone 39, so dass ein Weiterschieben des Arms 31 bzw. ein Drehen des Arms 31 um den Drehpunkt 34 und damit auch ein Positionieren der Winde 32 von einer Öffnung, beispielsweise von einer der Öffnungen 38a, 38b, 38c, 38d zur nächsten Öffnung mit geringstmöglichem Aufwand geschehen kann.

Zudem sei angemerkt, dass die Stütze 37 vorteilhafterweise mehrere Teile aufweist, so dass sich eine optimale Lastverteilung auf die feststellbaren Räder 36a, 36b bzw. auf die festen Spindelfüße neben den Rädern ergibt. Hierzu drückt die Last des Arms 31 und der daran angeordneten Winde 32, an der ein Spannglied mithilfe des Zugelements und der Arretiervorrichtung befestigt ist, auf eine mittlere Teilstütze, die mittig an einer Basis angeordnet ist, wobei die Basis die feststellbaren Räder 36a und 36b verbindet. Zudem verläuft die mittlere Teilstütze vorzugsweise parallel zur Achse 40. Des Weiteren sind zu der mittleren Teilstütze eine linke und eine rechte Teilstütze angeordnet, so dass diese schräg zur Basis und zur mittleren Teilstütze verlaufen, d.h., dass die linke und die rechte Teilstütze jeweils den entsprechenden äußeren Teil der Basis mit dem von der Basis fernen Teil der mittleren Stütze miteinander verbinden.

Nun sei auf Fig. 4a Bezug genommen, die die dreidimensionale Darstellung einer beispielhaften Ausführungsform 70 der erfindungsgemäßen Seilführung im teleskopierten Zustand, d.h. das teleskopierbare Element 73, welches die Seilführung 70 aufweist und insbesondere auf seine maximale Länge ausgezogen ist, illustriert.

Ferner ist an einem ersten Ende des teleskopierbaren Elements 73 ein Rollenfenster angeordnet, wobei das Rollenfenster, insbesondere der Rahmen des Rollenfensters, vorzugsweise integral, beispielsweise durch Schweißen, mit dem teleskopierbaren Element 73 verbunden ist. Dabei weist das Rollenfenster selbst insbesondere eine erste Rolle 71 sowie eine zweite Rolle 72 auf.

Während die erste Rolle 71 insbesondere rollbar, aber nicht notwendigerweise lösbar, ausgeführt ist, ist die zweite Rolle 72 vorzugsweise nicht nur rollbar, sondern auch lösbar, insbesondere mithilfe einer Schraubverbindung, an der Seilführung 70 bzw. am Rollenfenster, insbesondere am Rahmen des Rollenfensters, angeordnet. Vorteilhafterweise kann das Seil somit nicht nur durch das Rollenfenster hindurchgezogen, sondern auch nach zuvorigem Lösen der zweiten Rolle 72 in das Rollenfenster eingelegt werden.

Zudem weist die lösbare Schraubverbindung bezüglich der zweiten Rolle 72 vorzugsweise Flügelmuttern 75a, 75b auf, damit diese besonders einfach und ohne die Zuhilfenahme von Werkzeugen gelöst werden kann.

Ferner weist die Seilführung 70 ein Einhängeelement 74 auf, welches an einem zweiten Ende des teleskopierbaren Elements 73 der Seilführung 70 derart angeordnet ist, dass die Seilführung an der für das Einziehen des Seils vorgesehenen Öffnung befestigbar ist. Dabei weist die Anordnung des Einhängeelements 74 am teleskopierbaren Element 73 vorzugsweise eine integrale Verbindung, insbesondere eine Schweißverbindung, auf.

Des Weiteren zeigt Fig. 4b die Seilführung 70 im deteleskopierten Zustand, d.h. das teleskopierbare Element 73 der Seilführung 70 ist insbesondere auf seine minimale Länge zusammengeschoben. Auch in dieser Figur erkennt man die bereits oben beschriebenen Bestandteile, die die Seilführung 70 aufweist, weshalb diese mit denselben Bezugszeichen versehen sind. Bei diesen handelt es sich um das Einhängeelement 74, das teleskopierbare Element 73, die erste Rolle 71, die zusammen mit der zweiten Rolle 72 ein Rollenfenster bildet, sowie die Flügelmuttern 75a, 75b der lösbaren Schraubverbindung der zweiten Rolle 72.

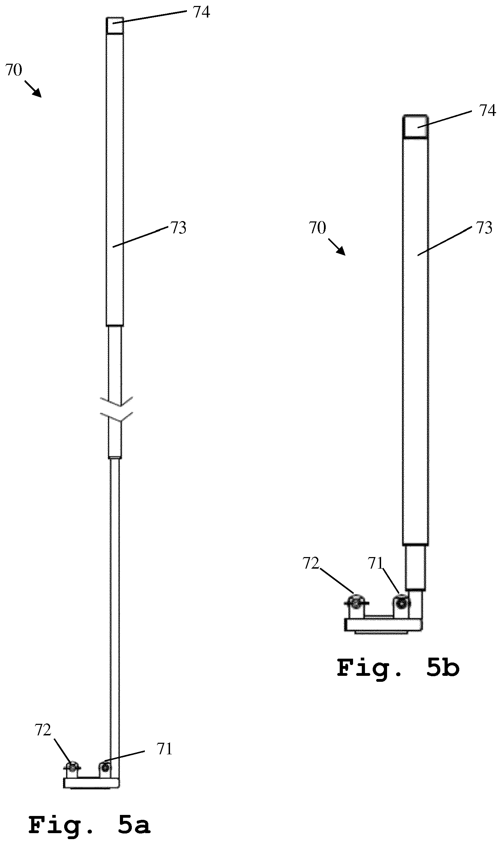

Ferner zeigt Fig. 5a die Seitenansicht einer ersten Seite der Seilführung 70 gemäß Fig. 4a im teleskopierten Zustand, wobei auch hier dieselben Bezugszeichen Verwendung finden. Fig. 5b illustriert hingegen die entsprechende Seitenansicht der Seilführung 70 im deteleskopierten Zustand.

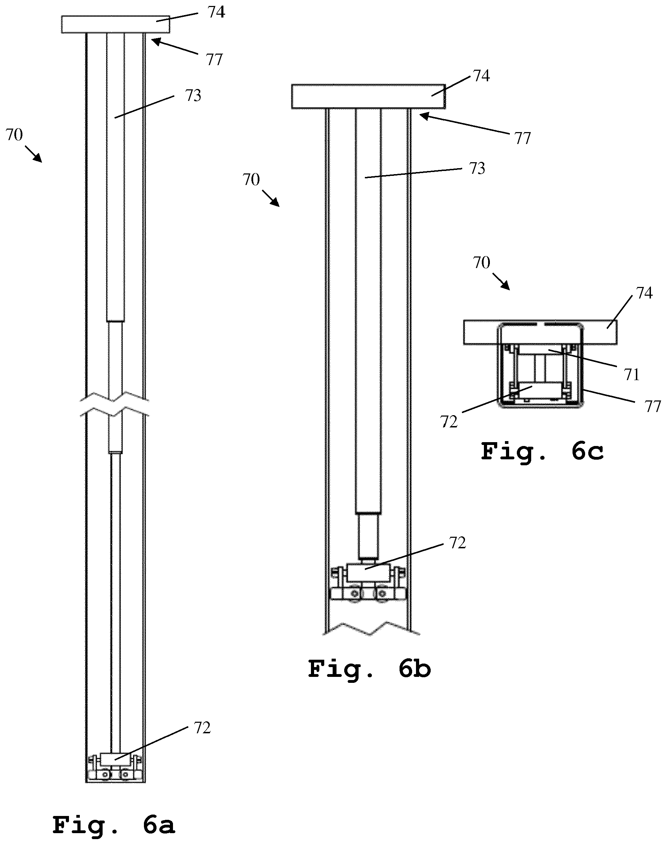

Fig. 6a zeigt die Seitenansicht einer zweiten Seite der Seilführung 70 im teleskopierten Zustand gemäß Fig. 4a, wobei die Seilführung 70 insbesondere mithilfe des Einhängeelements 74 an einer Öffnung eines Kanals befestigt ist.

Während Fig. 6b die entsprechende Seitenansicht der Seilführung 70 im deteleskopierten Zustand illustriert, zeigt Fig. 6c eine Draufsicht der in die Öffnung 77 eingehängten Seilführung 70. Zudem entsprechen die in den Figuren 6a, 6b, 6c verwendeten Bezugszeichen jeweils den zuvor verwendeten Bezugszeichen, was außerdem auch im Folgenden gelten soll.

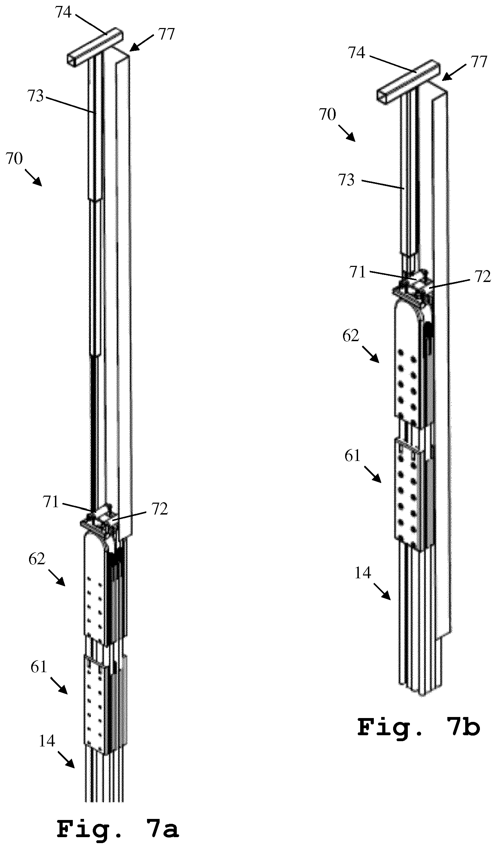

Des Weiteren zeigt Fig. 7a die dreidimensionale Darstellung der Seilführung 70 gemäß Fig. 4a, die mithilfe des Einhängeelements 74 an der Öffnung 77 befestigt ist, in Verbindung mit einem Spannglied 14, welches nach oben gezogen werden soll.

Am Spannglied 14 ist eine Arretiervorrichtung in Form der bereits beschriebenen Zugklemme 62 und Bandklemme 61 befestigt, um das Spannglied 14 sowohl mithilfe eines Seils nach oben ziehen zu können als auch im Bereich der Öffnung 77 temporär arretieren zu können.

In diesem Kontext erkennt man zudem, dass es sich bei der Öffnung 77 insbesondere um eine der Öffnungen 38a, 38b, 38c, 38d im Bereich der Turmkrone 39 eines Turmbauwerks gemäß der Fig. 3a und 3b handeln kann.

Wird nun das Spannglied 14 wie aus Fig. 7b ersichtlich nach oben gezogen bis die Arretiervorrichtung bzw. die Zugklemme 62 der Arretiervorrichtung, die aufgrund ihrer Abmessungen nicht durch das Rollenfenster, das von der ersten Rolle 71 und der zweiten Rolle 72 der Seilführung 70 gebildet wird, passt, an die Seilführung 70 im teleskopierten Zustand bzw. an das Rollenfenster anstößt. Nun wird die Seilführung 70 zunächst bis zum deteleskopierten Zustand gemäß Fig. 7b zusammengeschoben und schlussendlich aus der Öffnung 77 herausgeschoben. Nachdem die Seilführung 70 durch die Zugklemme 62 aus der Öffnung 77 geschoben wurde, kann die Seilführung 70 durch Entfernen der lösbaren zweiten Rolle 72 bzw. durch Öffnen des Rollenfensters vom Zugseil entfernt werden.

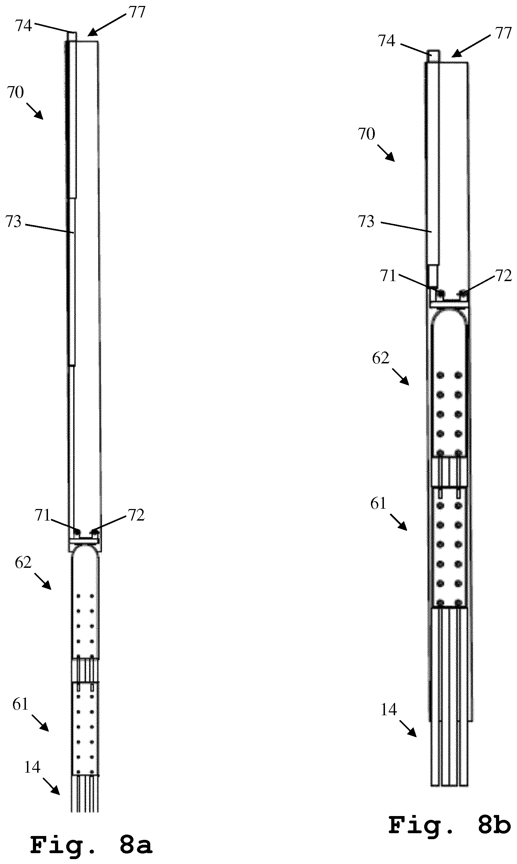

Während Fig. 8a die Seitenansicht der soeben beschriebenen dreidimensionalen Darstellung der Seilführung 70 im teleskopierten Zustand in Verbindung mit einem hochzuziehenden Spannglied 14 gemäß Fig. 7a darstellt, illustriert Fig. 8b abschließend die Seitenansicht der Darstellung der deteleskopierten Seilführung 70 in Verbindung mit dem Spannglied 14 gemäß Fig.7b.

Alle in den Ansprüchen beanspruchten Merkmale, alle in der Beschreibung beschriebenen Merkmale oder alle in der Zeichnung gezeichneten Merkmale sind im Rahmen der Erfindung beliebig miteinander kombinierbar.

## Patentansprüche

1. Eine Seilführung (70) zum beschädigungsfreien Führen eines Seils durch eine für das Einziehen des Seils vorgesehene Öffnung (77),
wobei die Seilführung (70) eine erste Rolle (71) aufweist, die an einem ersten Ende eines teleskopierbaren Elements (73) angeordnet ist.

2. Die Seilführung (70) nach Anspruch 1,
wobei an einem zweiten Ende des teleskopierbaren Elements (73) ein Einhängeelement (74) derart angeordnet ist, dass die Seilführung an der für das Einziehen des Seils vorgesehenen Öffnung (77) befestigbar ist.

3. Die Seilführung (70) nach Anspruch 1 oder 2,
wobei die Seilführung (70) eine zweite Rolle (72) aufweist, die derart angeordnet ist, dass die zweite Rolle (72) mit der ersten Rolle (71) ein Rollenfenster bildet, durch das das Seil geführt werden kann.

4. Die Seilführung (70) nach Anspruch 3,
wobei die zweite (72) Rolle lösbar, insbesondere mithilfe einer Schraubverbindung, an der Seilführung (70) angeordnet ist, so dass das Seil nach zuvorigem Lösen der zweiten Rolle (72) in das Fenster eingelegt werden kann.

5. Ein Verfahren zum beschädigungsfreien Führen eines Seils durch eine für das Einziehen des Seils vorgesehene Öffnung (77) mithilfe einer Seilführung (70) nach einem der Ansprüche 1 bis 4 mit folgenden Verfahrensschritten:
- Teleskopieren des teleskopierbaren Elements (73) der Seilführung (70) und
- Befestigen der Seilführung (70) im Bereich der für das Einziehen des Seils vorgesehenen Öffnung (77).

6. Das Verfahren nach Anspruch 5,
wobei das mithilfe der Seilführung (70) geführte Seil annähernd senkrecht nach oben gezogen wird und das erste Ende des teleskopierbaren Elements (73) nach unten zeigt.

7. Das Verfahren nach Anspruch 5 oder 6,
wobei das Seil zunächst durch ein Rollenfenster zwischen der ersten Rolle (71) und einer zweiten Rolle (72) der Seilführung (70) geführt wird oder nach zuvorigem Öffnen des Rollenfenster in dieses eingelegt wird und anschließend durch Zug am Zugende des Seils insbesondere nach oben gezogen wird.

8. Das Verfahren nach einem der Ansprüche 5 bis 7, wobei ein Anstoßen eines am zugfernen Ende des Seils angeordneten Elements, welches aufgrund seiner Abmessungen nicht durch ein Rollenfenster der Seilführung (70) passt, dazu führt, dass das teleskopierbare Element (73) der Seilführung (70) zunächst zusammengeschoben und die Seilführung anschließend aus der Öffnung (77) herausgezogen wird.

9. Das Verfahren nach einem der Ansprüche 5 bis 8, wobei, nachdem die Seilführung (70) aus der Öffnung (77) herausgezogen wurde, die Seilführung (70) durch Öffnen des Rollenfensters vom Seil entfernt wird.

10. Das Verfahren nach einem der Ansprüche 5 bis 9, wobei das Verfahren zum beschädigungsfreien Führen eines Seils verwendet wird, mit dem jeweils Spannglieder (14), die zum Vorspannen eines Turmbauwerks aus übereinander angeordneten Bauelementen dienen, durch entsprechend für das Einziehen von Spanngliedern (14) vorgesehene Öffnungen (11, 38a, 38b, 38c, 38d) im Bereich der Turmkrone (39) des Turmbauwerks nach oben gezogen werden.
